# EUROPEAN PATENT APPLICATION

(11) **EP 3 713 054 A1**
(43) Date of publication of application: **23.09.2020**
(21) Application number: 19190065.3
(22) Date of filing: 05.08.2019
(51) Int. Cl.: H02K 5/20, B60K 6/26, H02K 7/00

(54) **MOTOR FOR VEHICLE**

(30) Priority: 18.03.2019 KR 20190030775
(71) Applicant: HYUNDAI MOTOR COMPANY, Seoul 06797 (KR); Kia Motors Corporation, Seoul 06797 (KR)
(72) Inventor: LEE, Jong Won, 18441 Hwaseong-si, Gyeonggi-do (KR); HA, Kyoung Pyo, 13554 Seongnam-si, Gyeonggi-do (KR); KANG, Pyo Hyoun, 18441 Hwaseong-si, Gyeonggi-do (KR); LEE, Jun Hee, 18452 Hwaseong-si, Gyeonggi-do (KR)
(74) Representative: Viering, Jentschura & Partner mbB Patent- und Rechtsanwälte

(57) **Abstract**

A motor for a vehicle may include a rotor, and a stator mounted outside the rotor to form an air gap between the rotor and the stator, wherein the stator includes at least two external diameter portions with different external diameters.

## Description

### BACKGROUND OF THE INVENTION

### Field of the Invention

The present invention relates to a motor for a vehicle, and more particularly, to technology of a motor configuring a hybrid power train with an engine as an internal combustion.

### Description of Related Art

A hybrid power train of a vehicle enhances fuel efficiency of the vehicle by appropriately combining the characteristics of an engine as an internal combustion and the characteristics of a motor as an electric device.

A conventional method of additionally disposing a motor in a power train of a vehicle for transferring power of an engine to a driving wheel is broadly classified into a transmission mounted electric device (TMED) method and a flywheel mounted electric device (FMED) method.

The FMED method is a method of directly coupling a motor as an electric device to a flywheel of an engine and is different from the TMED method of coupling a motor to a transmission side to connect the motor to the engine through an engine clutch.

In a front engine front drive (FF) vehicle, an assembly configured by coupling an engine and a transmission is mostly mounted in a lateral direction of the vehicle, and in the instant case, the whole length of the engine transmission assembly needs to be accommodated within the width of a vehicular engine compartment in the lateral direction and, thus, one of very important objects in power train design is to reduce the whole length of the engine transmission assembly.

When a hybrid power train is configured by additionally mounting a motor to the aforementioned engine transmission assembly, the whole length of the engine transmission assembly is increased due to the width of the additionally mounted motor and, thus, a more serious problem arises with vehicle installation.

A driveshaft extends toward opposite drive wheels from a trans axle which is the transmission included in the engine transmission assembly and, in this regard, presence of the driveshaft that extends toward the engine in the driveshaft is a main design factor for limiting an external diameter of the motor mounted between the trans axle and the engine as described above and, thus, there is a limit in ensuring torque of the motor by enlarging the external diameter.

The information disclosed in this Background of the Invention section is only for enhancement of understanding of the general background of the invention and may not be taken as an acknowledgement or any form of suggestion that this information forms the prior art already known to a person skilled in the art.

### BRIEF SUMMARY

Various aspects of the present invention are directed to providing a motor configured for a vehicle, which provides sufficient output torque required by the motor while minimizing increase in the whole length of the engine transmission assembly by the motor mounted between an engine and a transmission and, thus, vehicle installation of the engine transmission assembly may be enhanced while sufficiently ensuring power performance required by the power train.

According to an exemplary embodiment of the present invention, a motor configured for a vehicle may include a rotor, and a stator mounted outside the rotor to form an air gap between the rotor and the stator, wherein the stator may include at least two external diameter portions with different external diameters.

The stator may include a first external diameter portion, and a second external diameter portion having an external diameter larger than an external diameter of the first external diameter portion, and a step difference is formed between the first external diameter portion and the second external diameter portion.

The stator may include a stator core and a winding, the stator core may be configured such that a plurality of first core plates forming the first external diameter portion and a plurality of second core plates forming the second external diameter portion are formed to overlap with each other, and the winding may be formed within only a range of the first core plates.

The motor may further include a motor housing mounted outside the stator to surround the stator, and a coolant path formed in the motor housing to circulate a coolant along a circumference of the stator.

The stator may include a first external diameter portion with a relatively small external diameter and a second external diameter portion with a larger external diameter than the first external diameter portion, the first external diameter portion having an external diameter gradually increased toward the second external diameter portion to form an oblique cross-section on the first external diameter portion.

The stator may include a stator core and a winding, the stator core includes a plurality of first core plates of which an external diameter is gradually increased to form the oblique cross-section of the first external diameter portion and a plurality of second core plates having a constant external diameter forming the second external diameter portion overlap each other, and the winding may be formed within only a smallest range of the first core plates.

According to various exemplary embodiments of the present invention, there is provided a hybrid power train for a vehicle, wherein the rotor of the motor as described above is coupled to a crankshaft of an engine to be coaxial with the crankshaft.

The stator may be configured such that the first external diameter portion is mounted to surface a side in which interference with a driveshaft may occur.

The stator may be configured such that the first external diameter portion is mounted toward the engine.

The methods and apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

FIG. 1 is a cross-sectional view for explanation of a structure of a motor configured for a vehicle according to an exemplary embodiment of the present invention.
FIG. 2 is a diagram for explanation of a configuration of a stator of the motor of FIG. 1.
FIG. 3 is a diagram for explanation of a configuration of a stator according to various exemplary embodiments of the present invention.
FIG. 4 is a diagram for explanation of the case in which interference with a driveshaft may occur when an external diameter of a motor is enlarged in a front engine front drive (FF)-type hybrid power train.

It may be understood that the appended drawings are not necessarily to scale, presenting a somewhat simplified representation of various features illustrative of the basic principles of the present invention. The specific design features of the present invention as included herein, including, for example, specific dimensions, orientations, locations, and shapes will be determined in part by the particularly intended application and use environment.

In the figures, reference numbers refer to the same or equivalent portions of the present invention throughout the several figures of the drawing.

### DETAILED DESCRIPTION

Reference will now be made in detail to various embodiments of the present invention(s), examples of which are illustrated in the accompanying drawings and described below. While the present invention(s) will be described in conjunction with exemplary embodiments of the present invention, it will be understood that the present description is not intended to limit the present invention(s) to those exemplary embodiments. On the other hand, the present invention(s) is/are intended to cover not only the exemplary embodiments of the present invention, but also various alternatives, modifications, equivalents and other embodiments, which may be included within the spirit and scope of the present invention as defined by the appended claims.

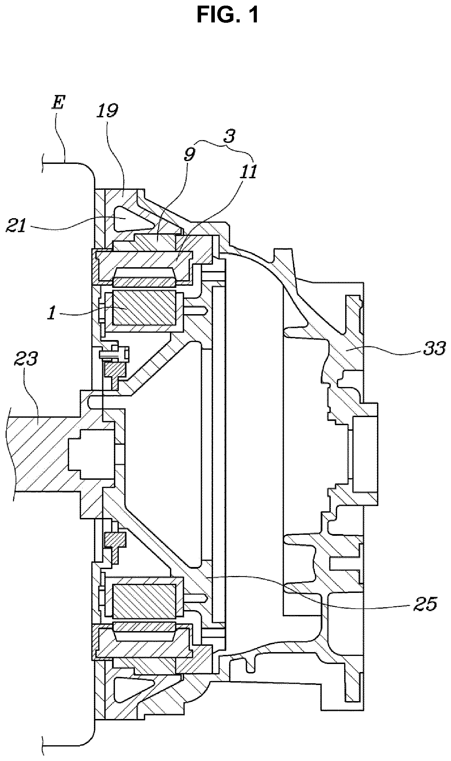

Referring to FIG. 1, FIG. 2, and FIG. 3, all embodiments of the present invention may commonly include a rotor 1 and a stator 3 which is mounted while forming an air gap outside the rotor 1 and, here, the stator 3 may include at least two external diameter portions with different external diameters.

That is, the motor according to an exemplary embodiment of the present invention may be configured by combining portions having different external diameters of the stator 3, which are not constant.

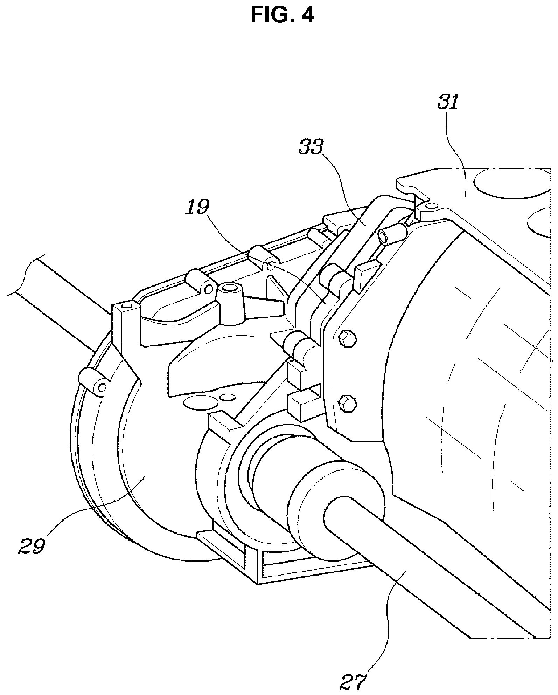

Accordingly, the external diameter of the stator 3 may be configured by combining different external diameters rather than configuring constant external diameters like a conventional general motor and, thus, a relatively small external diameter may prevent interference with other components such as a driveshaft 27 as described with reference to FIG. 4, and a relatively large external diameter may sufficiently form a magnetic field of a stator if possible to sufficiently ensure desired output torque by a motor.

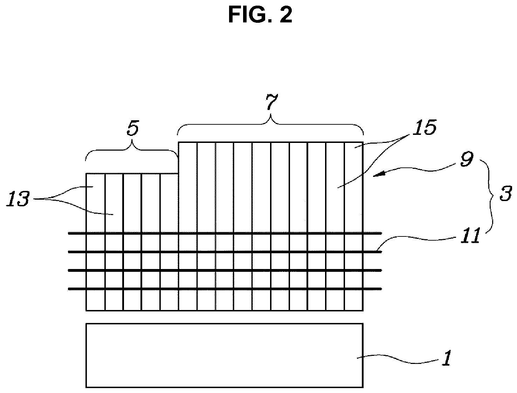

According to an exemplary embodiment of FIG. 1 and FIG. 2, the stator 3 may include a first external diameter portion 5 with a relatively small external diameter, and a second external diameter portion 7 with a larger external diameter than the first external diameter portion 5, and a step difference may be formed between the first external diameter portion 5 and the second external diameter portion 7.

In the instant case, the stator 3 may include a stator core 9 and a winding 11, the stator core 9 may be configured such that a plurality of first core plates 13 forming the first external diameter portion 5 and a plurality of second core plates 15 forming the second external diameter portion 7 may be formed to overlap with each other, and the winding 11 may be formed within only a range of the first core plates 13, which is for ensuring ease and structural stability of the winding 11.

In other words, the expression of "the winding 11 may be formed within only a range of the first core plates 13" means that the winding 11 may be formed within only a commonly overlapped portion of the first core plates 13 and the second core plates 15.

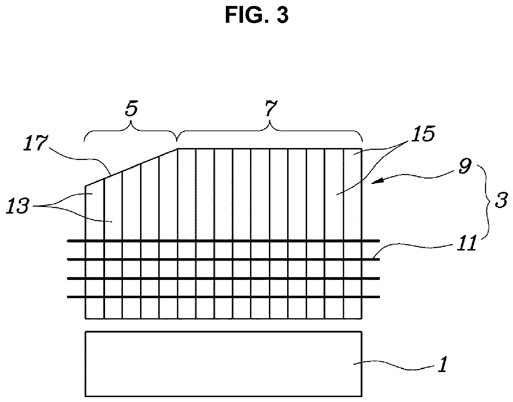

According to the exemplary embodiment of FIG. 3, the stator 3 may include the first external diameter portion 5 with a relatively small external diameter and the second external diameter portion 7 with a larger external diameter than the first external diameter portion 5, the first external diameter portion 5 having an external diameter gradually increased toward the second external diameter portion 7 to form an oblique cross-section 17.

In the instant case, the stator 3 may include the stator core 9 and the winding 11, the stator core 9 may be configured such that the plurality of first core plates 13 of which an external diameter is gradually increased to form the oblique cross-section 17 of the first external diameter portion 5 and the plurality of second core plates 15 having a constant external diameter forming the second external diameter portion 7 overlap each other, and the winding 11 may be formed within only a smallest range of the first core plates 13.

According to both the two embodiments, a motor housing 19 that surrounds the stator 3 may be configured outside the stator 3, and a coolant path 21 may be configured in the motor housing 19 to circulate a coolant along a circumference of the stator 3.

Accordingly, a coolant may forcibly flow through the coolant path 21, effectively cooling heat generated from the motor.

For reference, FIG. 1 illustrates the configuration in which a clutch housing 33 connected to a transmission is coupled to an engine E while surrounding a portion of the motor housing 19.

According to the aforementioned two embodiments, internal diameter portions of the stators 3 may be formed with a constant size in a direction of a rotation axis of the rotor 1 to form a section in parallel to the rotation axis of the rotor 1, and a section of the rotor 1 may also be formed in parallel to a rotation axis to correspond the internal diameter and external diameter of the rotor 1 to the internal diameter portion of the stator 3 and, thus, thrust force in an axial direction may not be advantageously generated when rotation force is generated.

In the above configured vehicle power train using the motor, the rotor 1 of the motor may be coupled to a crankshaft 23 of the engine E to be coaxial with the crankshaft 23, as shown in FIG. 1.

In FIG. 1, the rotor 1 may be coupled to the crankshaft 23 through a rotor body 25 which is coupled to the crankshaft 23 through the internal diameter portion of the rotor 1 and, thus, may also provide rotational inertial force to the crankshaft 23 with the rotor body 25 like a flywheel of a conventional engine.

According to the exemplary embodiment of the present invention, the stator 3 may be configured such that the first external diameter portion 5 is mounted toward an engine because the first external diameter portion 5 is mounted to face a side in which interference with a driveshaft 27 may occur.

As described above, as seen from FIG. 4, as the driveshaft 27 facing a driving wheel from a trans axle 29 extends along a lower lateral side of an engine block 31, the driveshaft 27 may interfere with the motor housing 19 and, thus, when a structure of the stator of the motor according to an exemplary embodiment of the present invention is used, the first external diameter portion 5 of the stator 3 may be positioned to surface a side in which the possibility of interference with the driveshaft 27 is high if possible, preventing interference with the driveshaft 27.

As described above, according to an exemplary embodiment of the present invention, a motor located between an engine and a transmission may be configured to provide sufficient output torque while the whole length of the engine transmission assembly is not increased.

That is, with regard to increase in an external diameter of a motor as a method selected to increase output of the motor in a state in which the whole length of the engine transmission assembly is limited, interference with other components such as a driveshaft limits increase in the external diameter of the motor and, in this regard, the present invention may provide a flexible structure for ensuring large output torque of the motor if possible within the present limit.

According to an exemplary embodiment of the present invention, a motor mounted between an engine and a transmission may provide sufficient output torque required by the motor while minimizing increase in the whole length of the engine transmission assembly and, thus, vehicle installation of the engine transmission assembly may be enhanced while sufficiently ensuring power performance required by the power train.

For convenience in explanation and accurate definition in the appended claims, the terms "upper", "lower", "inner", "outer", "up", "down", "upwards", "downwards", "front", "rear", "back", "inside", "outside", "inwardly", "outwardly", "internal", "external", "inner", "outer", "forwards", and "backwards" are used to describe features of the exemplary embodiments with reference to the positions of such features as displayed in the figures. It will be further understood that the term "connect" or its derivatives refer both to direct and indirect connection.

The foregoing descriptions of specific exemplary embodiments of the present invention have been presented for purposes of illustration and description. They are not intended to be exhaustive or to limit the present invention to the precise forms disclosed, and obviously many modifications and variations are possible in light of the above teachings. The exemplary embodiments were chosen and described to explain certain principles of the present invention and their practical application, to enable others skilled in the art to make and utilize various exemplary embodiments of the present invention, as well as various alternatives and modifications thereof. It is intended that the scope of the present invention be defined by the Claims appended hereto and their equivalents.

## Claims

1. A motor for a vehicle, the motor comprising:
a rotor; and
a stator mounted outside the rotor to form an air gap between the rotor and the stator,
wherein the stator includes at least two external diameter portions with different external diameters.

2. The motor for the vehicle of claim 1,
wherein the at least two external diameter portions of the stator includes a first external diameter portion, and a second external diameter portion having an external diameter larger than an external diameter of the first external diameter portion, and
wherein a step difference is formed between the first external diameter portion and the second external diameter portion.

3. The motor for the vehicle of claim 1 or 2,
wherein the stator includes a stator core and a winding;
wherein the stator core includes a plurality of first core plates forming the first external diameter portion and a plurality of second core plates forming the second external diameter portion, the plurality of first core plates formed to overlap with the plurality of second core plates; and
wherein the winding is formed at a portion commonly overlapped with the plurality of first core plates and the plurality of second core plates.

4. The motor for the vehicle of one of claims 1-3, further including:
a motor housing mounted outside the stator to surround the stator; and
a coolant path formed in the motor housing to circulate a coolant along a circumference of the stator.

5. The motor for the vehicle of one of claims 1-4,
wherein the at least two external diameter portions of the stator includes a first external diameter portion, and a second external diameter portion having an external diameter larger than an external diameter of the first external diameter portion, and
wherein the first external diameter portion has an external diameter formed to be increased toward the second external diameter portion to form an oblique cross-section on the first external diameter portion.

6. The motor for the vehicle of claim 5,
wherein the stator includes a stator core and a winding;
wherein the stator core includes a plurality of first core plates of which an external diameter is increased to form the oblique cross-section of the first external diameter portion and a plurality of second core plates having a constant external diameter forming the second external diameter portion, the plurality of first core plates formed to overlap with the plurality of second core plates; and
wherein the winding is formed within a smallest range of the first core plates.

7. A hybrid power train for the vehicle of claim 2 or of one of claims 1, 3-6 in combination with claim 2,
wherein the rotor of the motor is coupled to a crankshaft of an engine to be coaxial with the crankshaft.

8. The hybrid power train for the vehicle of claim 7,
wherein the first external diameter portion of the stator is mounted to face a side in which interference with a driveshaft occurs.

9. The hybrid power train for the vehicle of claim 7 or 8,
wherein the first external diameter portion of the stator is mounted toward the engine.

10. A hybrid power train for the vehicle of one of claims 1-9,
wherein the rotor of the motor is coupled to a crankshaft of an engine to be coaxial with the crankshaft.

11. The hybrid power train for the vehicle of claim 10,
wherein the first external diameter portion of the stator is mounted to face a side in which interference with a driveshaft occurs.

12. The hybrid power train for the vehicle of claim 10 or 11,
wherein the first external diameter portion of the stator is mounted to face the engine.
